# EUROPÄISCHE PATENTSCHRIFT

(11) **EP 0 487 785 B1**
(45) Veröffentlichungstag und Bekanntmachung des Hinweises auf die Patenterteilung: **25.05.1994**
(21) Anmeldenummer: 90123010.2
(22) Anmeldetag: 30.11.1990
(51) Int. Cl.: H02K 7/118, F16D 3/68

(54) **Pumpenrad-Antrieb**
Connection for a pump impeller
Entrainement pour rotor de pompe

(43) Veröffentlichungstag der Anmeldung: 03.06.1992
(73) Patentinhaber: SIEMENS AKTIENGESELLSCHAFT, 80333 München (DE)
(72) Erfinder: Bass, Martin, Dipl.-Ing., W-8700 Würzburg (DE); Deutloff, Norbert, Dipl.-Ing. (FH), W-8702 Thüngersheim (DE); Hartmann, Uwe, Dipl.-Ing. (FH), W-8709 Rimpar (DE); Weis, Rainer, W-8702 Oberpleichfeld (DE)

(56) Entgegenhaltungen:
- EP-A- 0 320 060
- DE-A- 3 823 461
- DE-C- 492 985
- DE-U- 8 807 108
- GB-A- 403 419
- GB-A- 1 144 062
- GB-A- 2 054 725
- US-A- 2 924 082

## Beschreibung

Die Erfindung bezieht sich auf einen Pumpenrad-Antrieb, insbesondere für eine Laugenpumpe, gemäß Oberbegriff des Patentanspruchs 1; ein derartiger Pumpenrad-Antrieb ist aus der DE-U-88 07 108 bekannt.

Antriebe mit Dauermagnetrotor gemäß der vorgenannten Art können bauartbedingt nicht asynchron anlaufen sondern müssen innerhalb einer elektrischen Halbwelle auf die Nenndrehzahl beschleunigen; der Synchronmotor muß dabei nicht nur das statische Lastmoment überwinden sondern im Anlauf zusätzlich ein Beschleunigungsmoment erbringen, das dem Trägheitsmoment der Last direkt proportional ist. Um dieses Trägheitsmoment unmittelbar nach dem Einschalten des Synchronmotors zu reduzieren, ist im vorgenannten bekannten Fall eine Kupplung mit Verdrehspiel vorgesehen, derart daß der Einphasen-Synchronmotor im ersten Augenblick des Einschaltens der Statorerregung noch frei von der Belastung durch die anzutreibende Last den Einschwingvorgang beginnen kann und erst nach Durchlaufen des Verdrehspiels gegen ein abtriebsseitiges Kupplungsteil anschlägt; u.a. zur Anschlagdämpfung ist zwischen einem antriebsseitigen Kupplungsteil und dem abtriebsseitigen Kupplungsteil ein in beiden Drehrichtungen elastisches Zwischenglied in Form einer Schenkelfeder vorgesehen.

Bei einem durch die EP-A2 0 320 060 bekannten Pumpenantrieb der eingangs genannten Art sind als Kupplung mit Verdrehspiel ein erstes mit der Motorachse formschlüssig verbundenes Kupplungsteil mit einem radial abstehenden Kupplungsstift und ein zweites abtriebsseitiges Kupplungsteil mit einer inneren Umfangsnut bekannt, in der sich der Kupplungsstift bis zu beidseitigen Anschlagschultern im Sinn eines Verdrehspiels bewegen kann; zur Dämpfung ist vorgesehen, diese Anschlagschultern als Teil des zweiten Kupplungsteiles vorzugsweise elastisch auszubilden.

Durch die DE-C-492 985 ist eine Kupplung ohne Verdrehspiel mit elastischen Puffern aus Gummi oder dergleichen bekannt, die I-förmig ausgebildet sind und deren die äußeren Schenkel verbindender Mittelsteg zwischen ein Paar radial abgesetzte, axial aus der sie aufnehmenden Kupplungshälfte vorstehende angegossene Metallsektoren eingebettet ist.

Der konstruktive und fertigungstechnische Aufwand bei optimal auslegbaren Dämpfungseigenschaften für ein derartiges dämpfendes Zwischenglied kann erfindungsgemäß bei einem Antrieb der eingangs genannten Art bei Gewährleistung voller Betriebssicherheit durch eine Konstruktion gemäß Lehre des Anspruchs 1 wesentlich gemindert werden; vorteilhafte Ausgestaltungen dieser Erfindung sind jeweils Gegenstand der Unteransprüche.

Das erfindungsgemäß vorgesehene gummielastische Einzel-Zwischenstück erlaubt bei einfachster Montage und einfachster Konstruktion der Kuplungsteile und Halterungsteile gleichzeitig eine hohe anschlagdämpfende als auch geräuschdämpfende Mitnahme bei kleinstem Kupplungsverschleiß; die Ringspaltverengung für den axial fügbaren Quetschsitz ist nach einer Ausgestaltung der Erfindung durch einfache radiale Einknickung der äußeren Ringhülse möglich.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: in einem axialen Teilschnittbild eine von einem Einphasen-Synchronmotor angetriebene Laugenpumpe,
- FIG 2: in einem Detailausschnitt aus Figur 1 die erfindungsgemäße Kupplung mit Verdrehspiel und einstückigem gummielastischen Zwischenteil im Schnittverlauf II-II in Figur 3,
- FIG 3: die axiale Draufsicht auf die Darstellung gemäß Figur 2.

In einem Spaltrohr 6 ist über ein erstes pumpenseitiges Rotorlager 62 und ein zweites kupplungsseitiges Rotorlager 63 die Rotorwelle 3 eines Einphasen-Synchronmotors zum Antrieb einer Laugenpumpe drehbar gelagert. Das Spaltrohr 6 wird von einem bewickelten Statorblechpaket 9 umfaßt. Das Spaltrohr 6 mündet an seinem linken Ende in einen Spaltrohrflansch 61 an dem unter Zwischenlage einer Dichtung 81 das Pumpengehäuse 8 der Laugenpumpe befestigt ist. Das linke Ende der Rotorwelle 9 ragt axial über das erste Rotorlager 62 hinaus in das Pumpengehäuse und trägt dort ein Pumpenrad 7. Im Bereich des Statorpaketes 9 ist relativ drehbar zur Rotorwelle 3 ein Dauermagnet-Kunststoffkörper 2 gelagert, der einen rotorseitigen Dauermagnetkörper 1 aufnimmt.

Zwischen dem rechten Ende des den Dauermagnetkörpers 1 aufnehmenden Dauermagnet-Kunststofftragkörpers 2 und dem zweiten Rotorlager 63 ist innerhalb des Spaltrohres 6 die erfindungsgemäß ausgebildete Kupplung mit Verdrehspiel angeordnet. Diese Kupplung besteht im wesentlichen aus einer antriebsseitigen Klaue 21, die einstückig an den Dauermagnet-Kunststofftragkörper axial vorstehend angespritzt ist, und einer abtriebsseitigen, mit der Rotorwelle 3 fest verbundenen Zwischenstück-Halterung 5 zur Aufnahme des zur Anschlagdämpfung vorgesehenen Elastomer-Zwischenstückes 4.

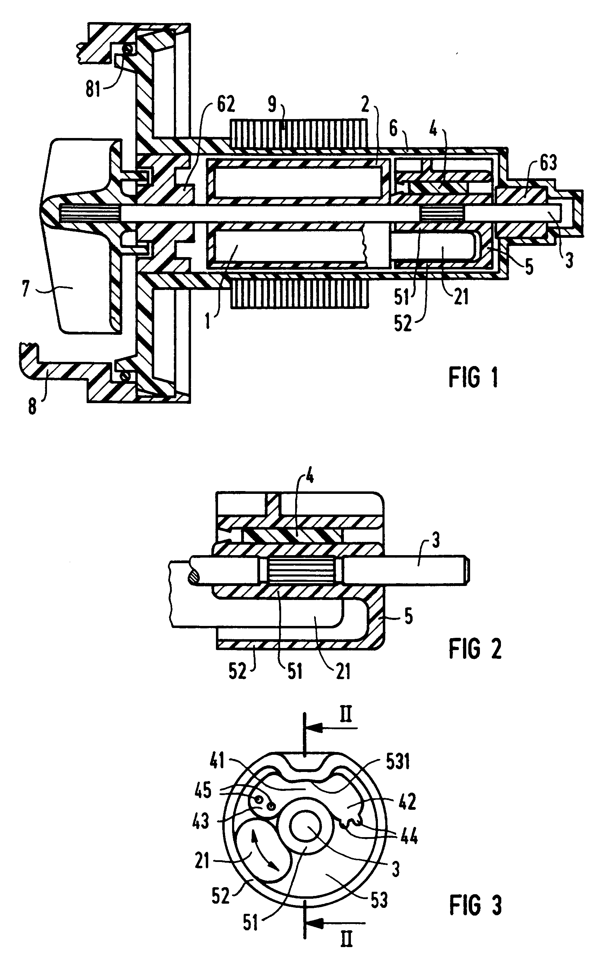

Wie insbesondere aus Figur 2, 3 ersichtlich, weist die abtriebsseitige Zwischenstück-Halterung 5 eine innere, auf der Rotorwelle 3 befestigte innere Ringhülse 51 und eine dazu unter Bildung eines Ringspaltes 53 in Abstand befestigte äußere Ringhülse 52 auf; durch radiale Einknickung der äußeren Ringhülse 52 wird eine Ringspaltverengung 531 gebildet, in die das Elastomer-Zwischenstück 4 derart axial eingedrückt ist, daß es tangential beidseitig der Ringspaltverenung 531 mit seitlichen Anschlägen 42 bzw. 43 in den Ringspalt 53 hineinragt und die Klaue 21 bei Bewegung in der einen oder anderen Drehrichtung erst nach Durchlaufen eines Verdrehspiels gegen einen der beiden seitlichen Anschläge 42 bzw. 43 zur Anlage kommt, diese elastisch verformt und dann über die Zwischenstückhalterung 5 die Rotorwelle 3 und somit das Pumpenrad 7 antreibt.

In vorteilhafter Weise sind die freien Anschlagenden der seitlichen Anschläge 42 bzw. 43 und/oder die freien Anschlagkanten der antriebsseitigen Klaue 21 abgerundet, derart daß der impulsartige Anschlag der Klaue 21 zeitlich verlängert und somit eine Verringerung von Verschleiß und Geräusch erreicht wird. Als weitere die Weichheit des Elastomers im Anschlagbereich beeinflussende und damit die Anschlagkraft-Kennlinie gezielt bestimmende Maßnahmen sind nach Ausgestaltungen der Erfindung die Anschlagenden der seitlichen Anschläge 42;43 mit vorstehenden Noppen 44 und/oder Ausnehmungen 45 versehen.

Nach einer besonders vorteilhaften Ausgestaltung der Erfindung sind - wie insbesondere aus Figur 3 ersichtlich - Freiräume zwischen den seitlichen Anschlägen 42 bzw. 43 und der inneren Ringhülse 51 und/oder der äußeren Ringhülse 52 derart vorgesehen, daß der jeweilige seitliche Anschlag 42 bzw. 43 durch die andrückende Klaue, vorzugsweise im Sinne einer Volumenkonstanz, vor einer Mitnahme der Rotorwelle unter Ausfüllung der Freiräume verformbar ist. Dadurch wird insbesondere erreicht, daß außer der an sich vorhandenen Gummielastizität des Elastomer-Zwischenstückes 4 dieses eine zusätzliche Durchbiegung erlaubt, bevor es in seiner Einbauumgebung an den Ringhülsen 51 bzw. 52 abgestützt wird. Diese Durchbiegung erlaubt ein Abfangen von Schwingungen des Systems mit kleinen Amplituden, bevor das elastische Material auf Druck beansprucht wird und unerwünschte Schwingungen auf die weiteren Kupplungsteile übertragen werden. Gleichzeitig erfolgt die Übertragung der Anschlagkraft der Klaue 21 auf die Zwischenstück-Halterung 5 nicht rein tangential auf die radiale Einknickung der inneren Ringhülse, so daß die Gefahr einer Abscherung der Verbindung der Zwischenstück-Halterung mit der Rotorwelle wesentlich gemindert bzw. die Halterung materialschwächer ausgeführt werden kann.

## Patentansprüche

1. Pumpenrad-Antrieb, insbesondere für eine Laugenpumpe, mit einem Einphasen-Synchronmotor mit dauermagnetischem Rotor und einer Kupplung mit Verdrehspiel mit in beiden Drehrichtungen durch ein Zwischenglied mit elastischem Endanschlag zwischen einem ersten antriebseitigen und einem zweiten, mit der Rotorwelle (3) verbundenen Kupplungsteil, **dadurch gekennzeichnet,** daß ein sich über einen Teilumfangsbereich erstreckendes Elastomer-Zwischenstück (4) in eine abtriebsseitige Zwischenstück-Halterung (5) in Form einer Ringspaltverengung (531) zwischen einer mit der Rotorwelle (3) verbundenen inneren Ringhülse (51) und einer dazu mit einem Ringspalt (53) in Abstand gehaltenen äußeren Ringhülse (52) mittig zwischen tangential seitlichen Anschlägen (42;43) für zumindest eine in dem übrigen Umfangsbereich im Sinne eines Hochlauf-Freilaufs bewegliche antriebsseitige Klaue (21) axial eindrückbar ist, die einstückig an einen den Dauermagneten (1) aufnehmenden, drehbar auf der Rotorwelle (3) gelagerten Kunststofftragkörper (2) angespritzt ist.

2. Pumpenrad-Antrieb nach Anspruch 1, **dadurch gekennzeichnet,** daß die Ringspaltverengung (531) durch eine radiale Einknickung der äußeren Ringhülse (52) gebildet ist.

3. Pumpenrad-Antrieb nach Anspruch 2, **gekennzeichnet durch** Freiräume zwischen den seitlichen Anschlägen (42;43) und der inneren Ringhülse (51) und/oder der äußeren Ringhülse (52), derart daß der jeweilige seitliche Anschlag (42 bzw.43) durch die andrückende Klaue (21), vorzugsweise im Sinne einer Volumenkonstanz, vor einer Mitnahme der Rotorwelle (3) unter Ausfüllung der Freiräume verformbar ist.

4. Pumpenrad-Antrieb nach einem der Ansprüche 1-3, **dadurch gekennzeichnet,** daß die freien Anschlagenden der seitlichen Anschläge (42;43) und/oder die freien Anschlagkanten der antriebsseitigen Klaue (21) abgerundet sind.

5. Pumpenrad-Antrieb nach einem der Ansprüche 1-4, **dadurch gekennzeichnet,** daß die freien Anschlagenden der seitlichen Anschläge (42;43) mit vorstehenden Noppen (44) versehen sind.

6. Pumpenrad-Antrieb nach einem der Ansprüche 1-5, **dadurch gekennzeichnet,** daß die freien Anschlagenden der seitlichen Anschläge (42;43) mit Ausnehmungen (45) versehen sind.

7. Pumpenrad-Antrieb für eine Laugenpumpe, mit in einem Spaltrohr (6) als Naßläufer gelagertem Rotor (1-3), auf dessen einem Ende der Rotorwelle (3) das Pumpenrad (7) der Flüssigkeitspumpe befestigt ist nach einem der Ansprüche 1-6, **dadurch gekennzeichnet,** daß die Kupplung (21;4;5) an dem anderen Ende der Rotorwelle (3) innerhalb des Spaltrohres (6) angeordnet ist.

## Claims

1. Impeller drive, preferably for a washing liquid drain pump, having a single phase synchronous motor with permanent field rotor and a coupling permitting rotary play in both directions of rotation by means of an intermediate element forming an elastic end stop disposed between a first input-side coupling part and a second coupling part connected to the rotor shaft (3), characterised in that an intermediate elastomer part (4) extending over a partial circumferential region is pressed axially into an output-side intermediate part holding means (5) in the form of an annular gap constriction (531) between an inner annular sheath (51) connected to said rotor shaft (3) and an outer annular sheath (52) spaced therefrom so as to form an annular gap (53), said elastomer part (4) being seated in the middle so as to form tangentially lateral stops (42;43) on both sides provided for at least one input-side drive dog (21) integrally molded on a plastics support element (2) rotatably seated on said rotor shaft (3) and receiving the permanent magnet (1), said drive dog (21) being movable in the remaining region of said annular gap (53) so as to facilitate free wheeling during running up.

2. Impeller drive of claim 1, characterised in that the annular gap constriction (531) is formed by radially inward buckling of the outer annular sheath (52).

3. Impeller drive of claim 2, characterised by free spaces between the lateral stops (42;43) and the inner annular sheath (51) and/or the outer annular sheath (52), in which the respective lateral stop (42 or 43) is deformed by the pressure of the drive dog (21), preferably whilst retaining a constant volume, so as to fill out said free spaces before transmitting driving action.

4. Impeller drive according to one of claims 1 - 3, characterised in that the free stop ends of the lateral stops (42;43) and/or the free engaging edges of the input side drive dog (21) are rounded off.

5. Impeller drive according to one of claims 1 - 4, characterised in that the free ends of the lateral stops (42;43) are provided with projections (44).

6. Impeller drive according to one of claims 1 - 5, characterised in that the free ends of the lateral stops (42;43) are provided with recesses (45).

7. Impeller drive for a washing liquid drain pump having a rotor (1-3) seated in a rotor can (6) as a wet-running rotor, whereby the impeller (7) of the liquid ring pump is mounted on one end of the rotor shaft (3), according to one of claims 1 - 6, characterised in that the coupling (21;4;5) is arranged at the other respective end of said rotor shaft (3) within the rotor can (6).

## Revendications

1. Dispositif d'entraînement de roue de pompe, notamment pour pompe à lessive, comportant un moteur synchrone monophasé ayant un rotor à aimant permanent et un accouplement comportant un jeu en rotation obtenu dans les deux sens de rotation au moyen d'un élément intermédiaire, avec une butée élastique de fin de jeu, entre une première pièce d'accouplement et une deuxième pièce d'accouplement reliée à l'arbre (3) du rotor, caractérisé en ce qu'une pièce intermédiaire (4) en élastomère, s'étendant sur une partie de la périphérie, peut être enfoncée axialement dans une fixation (5) de la pièce intermédiaire située du côté mené, se présentant sous forme d'un rétrécissement (531) d'intervalle annulaire entre un manchon annulaire intérieur (51) relié à l'arbre (3) du rotor et un manchon annulaire extérieur (52) maintenu à distance, avec un intervalle annulaire (53), en position médiane entre des butées (42, 43) latérales tangentielles destinées à au moins une griffe (21) qui est située côté menant, qui est mobile en vue d'effectuer une course libre d'accélération dans la zone périphérique restante et qui vient de moulage par injection avec un support (2) en matière plastique, monté rotatif sur l'arbre du rotor (3) et recevant l'aimant permanent (1).

2. Dispositif d'entraînement de roue de pompe selon la revendication 1, caractérisé en ce que le rétrécissement (531) d'intervalle annulaire est formé par un coude vers l'intérieur du manchon annulaire extérieur (52).

3. Dispositif d'entraînement de roue de pompe selon la revendication 2, caractérisé en ce qu'il comporte des espaces vides entre les butées latérales (42 ; 43) et le manchon annulaire intérieur (5) et/ou le manchon annulaire extérieur (52) de façon telle que la butée latérale (42 ou 43) puisse, avec remplissage des espaces vides, être déformée, de préférence à volume constant, par la griffe (21) qui s'y applique, avant l'entraînement de l'arbre (3) de rotor.

4. Dispositif d'entraînement de roue de pompe selon l'une des revendications 1 à 3, caractérisé en ce que les extrémités libres de butée des butées latérales (42 ; 43) et/ou les bords libres de butée de la griffe (21) côté menant sont arrondies.

5. Dispositif d'entraînement de roue de pompe selon l'une des revendications 1 à 4, caractérisé en ce que les extrémités libres de butée des butées latérales (42 ; 43) sont munies de tétons (44).

6. Dispositif d'entraînement de roue de pompe selon l'une des revendications 1 à 5, caractérisé en ce que les extrémités libres de butée des butées latérales sont munies d'évidements (45).

7. Dispositif d'entraînement de roue de pompe destiné à une pompe à lessive, comportant un rotor (1 - 3) monté en tant que rotor immergé dans une gaine (6) et à l'une des extrémités de l'arbre (3) de rotor duquel est fixé la roue (7) la pompe à liquide, selon l'une des revendications 1 à 6, caractérisé en ce que l'accouplement (21 ; 4 ; 5) est disposé à l'autre extrémité de l'arbre (3) de rotor, à l'intérieur de la gaine (6).
